# EUROPÄISCHE PATENTSCHRIFT

(11) **EP 3 050 141 B1**
(45) Veröffentlichungstag und Bekanntmachung des Hinweises auf die Patenterteilung: **10.11.2021**
(21) Anmeldenummer: 14758858.6
(22) Anmeldetag: 02.09.2014
(51) Int. Cl.: H01M 10/052, H01M 10/0562, H01M 4/131, H01M 4/133, H01M 4/505, H01M 4/525, H01M 4/587, H01M 10/0525, H01M 4/62

(54) **ELEKTRODENMATERIAL MIT LITHIUM-ARGYRODIT**
ELECTRODE MATERIAL WITH LITHIUM-ARGYRODITE
MATIÈRE D'ÉLECTRODE COMPORTANT DE L'ARGYRODITE LITHIÉE

(30) Priorität: 27.09.2013 DE 102013219606
(43) Veröffentlichungstag der Anmeldung: 03.08.2016
(73) Patentinhaber: Robert Bosch GmbH, 70442 Stuttgart (DE)
(72) Erfinder: RITTER, Helene, 70176 Stuttgart (DE); PIRK, Tjalf, 70195 Stuttgart (DE); SCHECKER, Olivier, 70197 Stuttgart (DE)
(86) Internationale Anmeldenummer: PCT/EP2014/068558
(87) Internationale Veröffentlichungsnummer: WO 2015/043889

(56) Entgegenhaltungen:
- EP-A1- 2 043 188
- WO-A1-2009/133443
- WO-A1-2013/005085
- DE-A1-102007 048 289
- JP-A- 2013 171 713
- JP-B2- 3 789 953
- US-A- 4 184 015
- US-A1- 2011 081 580
- SYLVAIN BOULINEAU ET AL: "Mechanochemical synthesis of Li-argyrodite LiPS(=Cl, Br, I) as sulfur-based solid electrolytes for all solid state batteries application", SOLID STATE IONICS, NORTH HOLLAND PUB. COMPANY. AMSTERDAM; NL, NL, Bd. 221, 5. Juni 2012 (2012-06-05), Seiten 1-5, XP028432169, ISSN: 0167-2738, DOI: 10.1016/J.SSI.2012.06.008 [gefunden am 2012-06-12]
- CHOWDARI B V R ET AL: "Electrical and electrochemical characterization of Li2O:P2O5:Nb2O5-based solid electrolytes", JOURNAL OF NON-CRYSTALLINE SOLIDS, NORTH-HOLLAND PHYSICS PUBLISHING. AMSTERDAM, NL, vol. 110, no. 1, 1 July 1989 (1989-07-01), pages 101-110, XP024063984, ISSN: 0022-3093, DOI: 10.1016/0022-3093(89)90187-7 [retrieved on 1989-07-01]

## Beschreibung

Die vorliegende Erfindung betrifft ein Elektrodenmaterial, eine Lithium-Zelle und - Batterie, insbesondere Trockenbatteriezelle, und deren Verwendung.

### Stand der Technik

Flüssigelektrolyt-Batterien sind typischerweise auf der Basis von porösen Verbundelektroden aufgebaut, welche Aktivmaterial (Speichermaterial) beinhalten. Dabei nehmen Poren einen großen Anteil am Volumen der Elektroden ein. In den Poren wird Flüssigelektrolyt eingebracht, welcher Ionen zwischen den Aktivmaterialien der Elektroden transportiert.

Trockenbatterien beziehungsweise Festkörperbatterien stellen einen anderen Batterie-Typ dar und weisen kompakte Elektrodenschichten aus reinem Aktivmaterial auf, wobei zwischen den Elektrodenschichten ein Festkörperelektrolyt angeordnet ist.

Die Druckschrift DE 10 2011 076 177 A1 beschreibt eine Schichtanordnung mit einer zwischen zwei Elektrodenschichten angeordneten Festkörperelektrolytschicht.

Weiterhin ist aus der WO 2013/005085 A1 eine Lithium-Zelle bekannt, deren positive Elektrode ein Aktivmaterial, einen Festkörper-Lithiumionenleiter und einen Binder enthält. Darüber hinaus ist aus der DE 10 2007 048 289 A1 und der Publikation SYLVAIN BOULINEAU ET AL:"Mechanochemical synthesis of Liargyrodite LiPS(=Cl, Br, I) as sulfur-based solid electrolytes for all solid state Batteries application",SOLID STATE IONICS, NORTH HOLLAND PUB. COMPANY. AMSTERDAM; NL, NL, Bd. 221, 5. Juni 2012 (2012-06-05), Seiten 1-5, XP028432169, ISSN: 0167-2738, DOI: 10.1016/J.SSI.2012.06.008 bekannt, Argyrodite als Festlelektrolytmaterialien für Festkörperbatterien einzusetzen.

Auch aus der EP 2 043 188 A1 ist eine Energiespeicherzelle mit Elektroden unterschiedlichen Materials bekannt. Darüber hinaus ist aus der WO 2009/133443 A1 die Verwendung von Lithium-Titan-Oxiden bekannt. Weiterhin zeigt die JP 2013 171713 A eine Elektrode für Batterien, welche ein AktivMaterial mit Kanälen umfasst, welche mit Elektrolyt befüllt sind. Darüber hinaus zeigt die Publikation CHOWDARI B V R ET AL:"Electrical and electrochemical characterization of Li2O:P2O5:Nb2O5-based solid electrolytes", JOURNAL OF NON-CRYSTALLINE SOLIDS, NORTH-HOLLAND OHYSICS PUBLISHING. AMSTERDAM, NL, Bd. 110, Nr. 1, 1. Juli 1989 (1989-07-01), Seiten 101-110, XP024063984, ISSN: 0022-3093, DOI: 10.1016/0022-3093(89)90187-7 Phosphor- bzw. Niobium-basierte Festelektrolyte. Weiterhin zeigt die US 4 184 015 A amorphe Festkörper-lonenleiter, welche borhaltig sind.

### Offenbarung der Erfindung

Gegenstand der vorliegenden Erfindung ist ein Elektrodenmaterial, beispielsweise ein Kathodenmaterial oder ein Anodenmaterial, für eine Lithium-Zelle, insbesondere eine Trockenbatteriezelle, welches mindestens ein lithiierbares Elektrodenaktivmaterial, beispielsweise Kathodenaktivmaterial oder Anodenaktivmaterial, mindestens einen, insbesondere organischen, Binder und mindestens einen Festkörperlithiumionenleiter umfasst.

Unter einer Lithium-Zelle kann insbesondere eine elektrochemische Zelle verstanden werden, deren Anode (negative Elektrode) Lithium umfasst. Beispielsweise kann es sich dabei um eine Lithium-Ionen-Zelle, eine Zelle deren Anode (negative Elektrode) ein Interkalationsmaterial, zum Beispiel Graphit, umfasst, in welches Lithium reversibel ein- und auslagerbar ist, oder um eine Lithium-Metall-Zelle, eine Zelle mit einer Anode (negativen Elektrode) aus metallischem Lithium oder einer Lithiumlegierung, handeln. Insbesondere kann die Lithium-Zelle eine Lithium-Ionen-Zelle sein.

Unter einem lithiierbaren Material kann insbesondere ein Material verstanden werden, welches reversibel Lithiumionen aufnehmen und wieder abgeben kann. Beispielsweise kann ein lithiierbares Material mit Lithiumionen interkalierbar und/oder mit Lithiumionen legierbar sein und/oder Lithiumionen unter Phasenumwandlung aufnehmen und wieder abgeben. Beispielsweise kann das lithiierbare Elektrodenaktivmaterial ein mit Lithiumionen interkalierbares Elektrodenaktivmaterial sein.

Das lithiierbare Elektrodenaktivmaterial kann auch als aktives Speichermaterial bezeichnet werden. Beispielsweise kann das Elektrodenaktivmaterial bei gleichzeitigem Vorhandensein eines Lithiumions (Li⁺) und eines Elektrons das Lithiumion einlagern, was auch als Interkalieren bezeichnet wird, und je nach Spannung wieder freigeben, was auch als Deinterkalieren bezeichnet wird. Das Lithiumion kann dabei von dem Elektrodenaktivmaterial an den Festkörperlithiumionenleiter abgegeben beziehungsweise aus diesem entnommen werden.

Der Festkörperlithiumionenleiter kann dabei vorteilhafterweise die Funktion eines ionischen Leitnetzwerkes übernehmen, um den Ionentransport in dem Elektrodenmaterial sicherzustellen.

Der mindestens eine Festkörperlithiumionenleiter ist erfindungsgemäß ausgewählt in Form eines Lithiumionen leitenden Glases basierend auf der allgemeinen chemischen Formel: LiX:MY wobei LiX für LiCl, LiBr und MY für MoO3, WO3, P2O3, As2O5 und/oder Nb2O5 steht.

So kann vorteilhafterweise die Langzeitstabilität und/oder Performance, beispielsweise der Energieinhalt und/oder Leistungsinhalt, einer mit dem Elektrodenmaterial ausgestatteten Zelle beziehungsweise Batterie, insbesondere Trockenbatterie, beispielsweise auf Lithiumionen-Basis, verbessert werden.

Dies liegt insbesondere darin begründet, dass Lithium-Argyrodite und Lithiumionen leitenden Gläser vorteilhafterweise eine hohe Lithiumionenleitfähigkeit und geringe Kontaktübergangswiderstände aufweisen, was sich vorteilhaft auf die Ionenleitung auswirkt. Insbesondere können Lithium-Argyrodite und Lithiumionen leitenden Gläser vorteilhafterweise eine höhere Lithiumionenleitfähigkeit und insbesondere geringere Kontaktübergangswiderstände als Lithiumphosphoroxynitrid (LiPON) und Lithiumionen leitende Keramiken mit Granat-Struktur aufweisen.

Durch eine verbesserte Ionenleitung kann wiederum vorteilhafterweise eine schnellere Verteilung der Lithiumionen erzielt und damit die Belastung der Batterie bei gleichem abgerufenem Leistungsprofil, sowohl transversal durch die Batterie als auch lateral reduziert und damit die Lebensdauer erhöht werden. Durch eine Reduzierung der transversalen Belastung kann dabei zudem vorteilhafterweise der Spannungsverlauf der Zelle verbessert werden. Durch eine Reduzierung der lateralen Belastung können dabei lokale Spannungsspitzen minimiert werden.

Die verbesserte Ionenleitung ermöglicht es jedoch auch vorteilhafterweise unter einer Beibehaltung der Gesamtionenleitung den Festkörperlithiumionenleiteranteil zu reduzieren und dadurch den Elektrodenaktivmaterialanteil und somit die Energiedichte zu erhöhen.

Zudem können Lithium-Argyrodite und Lithiumionen leitende Gläser vorteilhafterweise auf einfache Weise, insbesondere pulverförmig, hergestellt werden, insbesondere wobei auf aufwändiges Sputtern beziehungsweise eine aufwändige Hochtemperatursynthese verzichtet werden kann.

Dadurch, dass das Elektrodenmaterial den Festkörperlithiumionenleiter umfasst, kann zudem vorteilhafterweise auf einen Flüssigelektrolyten verzichtet und insbesondere eine Trockenbatteriezelle ausgebildet werden. Dadurch können wiederum vorteilhafterweise gute Alterungseigenschaften, insbesondere eine hohe Langzeitstabilität, sowie eine lange Einsatzdauer der Zelle erzielt werden. Darüber hinaus kann so vorteilhafterweise die Eigensicherheit der Zelle verbessert werden. Ferner kann dadurch vorteilhafterweise der Temperaturbereich, in dem die Zelle eingesetzt werden kann, zu höheren Temperaturen, beispielsweise von ≥ 80 °C, erweitert werden, wodurch wiederum Übergangswiderstände und die lonenleitfähigkeit und damit die Langzeitstabilität und Performance weiter verbessert werden können.

Durch den mindestens einen organischen, Binder kann vorteilhafterweise der Zusammenhalt des Elektrodenmaterials und damit die Stabilität und Flexibilität des Elektrodenmaterials und beispielsweise dessen Haftung auf einem Substrat sowie die Ionenleitung verbessert werden. Dadurch können wiederum die Langzeitstabilität und die Alterungseigenschaften weiter verbessert sowie die Länge der Einsatzdauer der Zelle weiter erhöht werden.

Wie im Folgenden erläutert, kann die Ionenleitung noch durch weitere Maßnahmen weiter gesteigert werden. Insbesondere kann so vorteilhafterweise eine Ionenleitung, insbesondere in einer Trockenbatterie, erzielt werden, welche bezüglich existierenden Trockenbatteriekonzepten, aber auch potentiell bezüglich konventionellen Flüssigelektrolyt-Batterien, verbessert sein kann.

Unter Lithium-Argyroditen können insbesondere Verbindungen verstanden werden, welche sich von dem Mineral Argyrodit der allgemeinen chemischen Formel: Ag₈GeS₆ ableiten, wobei Silber (Ag) durch Lithium (Li) ersetzt ist und wobei insbesondere auch Germanium (Ge) und/oder Schwefel (S) durch andere Elemente, zum Beispiel der III., IV., V., VI. und/oder VII. Hauptgruppe, ersetzt sein können.

Beispiele für Lithium-Argyrodite sind:
- Verbindungen der allgemeinen chemischen Formel:

   Li₇PCh₆

   wobei Ch für Schwefel (S) und/oder Sauerstoff (O) und/oder Selen (Se), beispielsweise Schwefel (S) und/oder Selen (Se),
- Verbindungen der allgemeinen chemischen Formel:

   Li₆PCh₅X

   wobei Ch für Schwefel (S) und/oder Sauerstoff (O) und/oder Selen (Se), beispielsweise Schwefel (S) und/oder Sauerstoff (O), und X für Chlor (Cl) und/oder Brom (Br) und/oder Iod (I) und/oder Fluor (F), beispielsweise X für Chlor (Cl) und/oder Brom (Br) und/oder Iod (I), steht,
- Verbindungen der allgemeinen chemischen Formel:

   Li_{7-δ}BCh_{6-δ}X_{δ}

   wobei Ch für Schwefel (S) und/oder Sauerstoff (O) und/oder Selen (Se), beispielsweise Schwefel (S) und/oder Selen (Se), B für Phosphor (P) und/oder Arsen (As), X für Chlor (Cl) und/oder Brom (Br) und/oder Iod (I) und/oder Fluor (F), beispielsweise X für Chlor (Cl) und/oder Brom (Br) und/oder Iod (I), steht und 0 ≤ δ ≤ 1.

Zum Beispiel sind Lithium-Argyrodite mit den chemischen Formeln: Li₇PS₆, Li₇PSe₆, Li₆PS₅Cl, Li₆PS₅Br, Li₆PS₅I, Li_{7-δ}PS_{6-δ}Cl_{δ}, Li_{7-δ}PS_{6-δ}Br_{δ}, Li_{7-δ}PS_{6-δ}I_{δ}, Li_{7-δ}PSe_{6-δ}Cl_{δ}, Li_{7-δ}PSe_{6-δ}Br_{δ}, Li_{7-δ}PSe_{6-δ}l_{δ}, Li_{7-δ}AsS_{6-δ}Br_{δ}, Li_{7-δ}AsS_{6-δ}I_{δ}, Li₆AsS₅I, Li₆AsSe₅I, Li₆PO₅Cl, Li₆PO₅Br, Li₆PO₅I bekannt.

Lithium-Argyrodite sind beispielsweise in den Druckschriften: Angew. Chem. Int. Ed., 2008, 47, 755-758; Z. Anorg. Allg. Chem., 2010, 636, 1920-1924; Chem. Eur. J., 2010,16,2198-2206; Chem. Eur. J., 2010,16, 5138-5147; Chem. Eur. J., 2010,16, 8347-8354; Solid State Ionics, 2012, 221, 1-5; Z. Anorg. Allg. Chem., 2011, 637, 1287-1294; und Solid State Ionics, 2013, 243, 45-48 beschrieben.

Insbesondere können schwefelhaltige beziehungsweise sulfidische Lithium-Argyrodite, zum Beispiel bei denen Ch für Schwefel (S) steht, eingesetzt werden.

Lithium-Argyrodite können insbesondere durch einen mechanisch-chemischen Reaktionsprozess hergestellt werden, zum Beispiel wobei Ausgangsstoffe, wie Lithiumhalogenide, beispielsweise LiCl, LiBr und/oder LiI, und/oder Lithiumchalkogenide, beispielsweise Li₂S und/oder Li₂Se und/oder Li₂O, und/oder Chalkogenide der V. Hauptgruppe, beispielsweise P₂S₅, P₂Se₅, Li₃PO₄, insbesondere in stöchiometrischen Mengen, miteinander vermahlen werden. Dies kann beispielsweise in einer Kugelmühle, insbesondere einer Hochenergiekugelmühle, zum Beispiel mit einer Umdrehungszahl von 600 rpm, erfolgen. Insbesondere kann das Mahlen unter Schutzgasatmosphäre erfolgen.

Im Rahmen einer Ausführungsform ist der mindestens eine Festkörperlithiumionenleiter ausgewählt aus der Gruppe der Lithium-Argyrodite, Schwefelgläser (sulfidische Gläser), Phosphatgläser, Germaniumgläser und/oder Lithiumionen leitenden Gläser basierend auf der allgemeinen chemischen Formel: LiX : MY, wobei LiX für eine oder mehrere Lithiumverbindungen, und MY für eines oder mehrere Oxide, Sulfide und/oder Selenide, insbesondere Oxide, von Bor, Aluminium, Molybdän, Wolfram, Phosphor, Silizium, Germanium, Arsen und/oder Niob steht.

Diese Festkörperlithiumionenleiter haben sich als besonders vorteilhaft erwiesen, da sie eine hohe Lithiumionenleitfähigkeit und geringe Kontaktübergangswiderstände an den Korngrenzen innerhalb des Materials sowie zu weiteren Komponenten, beispielsweise einer Trockenbatterie, beispielsweise Elektrodenaktivmaterial, zum Beispiel Kathodenaktivmaterial beziehungsweise Anodenaktivmaterial, aufweisen können. So kann vorteilhafterweise die Langzeitstabilität und Performance einer mit dem Elektrodenmaterial ausgestatteten Zelle beziehungsweise Batterie, beispielsweise Trockenbatterien, weiter verbessert werden. Durch die Verwendung von Mischungen von Festkörperlithiumionenleitern können gegebenenfalls Übergangswiderstände zwischen den Festkörperlithiumionenleitern sowie zu weiteren Komponenten des Elektrodenmaterials, der Elektrode beziehungsweise der Zelle/Batterie weiter reduziert und die Ionenleitung weiter optimiert werden.

Beispiele für Lithiumionen leitende Schwefelgläser (sulfidische Gläser) sind Li₁₀GeP₂S₁₂, Li₂S-(GeS₂)-P₂S₅ und Li₂S-P₂S₅. Beispielsweise können germaniumhaltige, Schwefelgläser (sulfidische Gläser), zum Beispiel Li₁₀GeP₂S₁₂ und/oder Li₂S-(GeS₂)-P₂S₅, insbesondere Li₁₀GeP₂S₁₂, eingesetzt werden. Germaniumhaltige sulfidische Lithiumionenleiter können vorteilhafterweise eine hohe Lithiumionenleitfähigkeit und hohe chemische Stabilität aufweisen.

Zu den Phosphatgläsern kann zum Beispiel Lithium substituiertes NASICON gezählt werden.

Auf der allgemeinen chemischen Formel: LiX : MY basierende Lithiumionen leitenden Gläser können sowohl binär als auch ternär oder aus mehr Grundbestandteilen hergestellt sein. Auf der allgemeinen chemischen Formel: LiX : MY basierende Lithiumionen leitenden Gläser können daher zwei oder mehr Verbindungen LiX und/oder zwei oder mehr Verbindungen MY sowie gegebenenfalls eine oder mehrere weitere Verbindungen, beispielsweise Aluminiumchlorid, zum Beispiel AlCl₃,umfassen. Beispielsweise können auf der allgemeinen chemischen Formel: LiX : MY basierende Lithiumionen leitende Gläser aus drei Grundbestandteilen entsprechend der allgemeinen Formel: MX : M₂O : AₓO_{y} hergestellt sein, wobei MX für mindestens ein Dotierungssalz, beispielsweise Lithiumsalz, zum Beispiel Lil, et cetera, M₂O für mindestens einen Glasmodifizierer, zum Beispiel ein (anderes) Lithiumsalz, beispielsweise Li₂O, et cetera, und AₓO_{y} für mindestens einen Glasbildner, zum Beispiel mindestens ein Oxid, Sulfid und/oder Selenid, insbesondere Oxid, beispielsweise von Bor, Aluminium, Molybdän, Wolfram, Phosphor, Silizium, Germanium, Arsen und/oder Niob, zum Beispiel B₂O₃, MoO₃, WO₃, P₂O₅, SiO₂, As₂O₅, et cetera, steht.

LiX kann beispielsweise aus der Gruppe der Chloride, Bromide, lodide, Oxide, Sulfide, Sulfate und/oder Phosphate von Lithium, ausgewählt sein. Zum Beispiel kann LiX für LiCl, LiBr, LiI, Li₂O, Li₂S, Li₂SO₄, und/oder LiPO₃ stehen.

MY kann beispielsweise für B₂O₃, Al₂O₃, Al₂S₃, Al₂Se₃, AlCl₃, MoO₃, MoS₃, MoSe₃, MoO₂,MoS₂, MoSe₂, MoO, MoS, MoSe, WO₃, WS₃, WSe₃, WO₂, WS₂, WSe₂, LiW0₃, WO₂, WS₂, WSe₂, W₂O₃, W₂S₃, W₂Se₃, P₂O₅, P₂S₅, P₂Se₅, P₂O₃, P₂S₃, P₂Se₃, SiO₂, SiS₂, SiSe₂, SiO, SiS, SiSe, Si₂S₂, GeO₂, GeS₂, GeSe₂, GeO, GeS, GeSe, AS₂O₅, As₂S₅, As₂Se₅, As₂O₄, As₂S₄, As₂Se₄, As₂O₃, As₂S₃, As₂Se₃, Nb₂O₅, LiNbO₃, NbO₂, NbS₂, NbSe₂, NbO, NbS und/oder NbSe stehen.

Insbesondere kann bei auf der allgemeinen chemischen Formel: LiX : MY basierenden Lithiumionen leitenden Gläsern LiX für LiCl, LiBr, LiI, Li₂O, Li₂S, Li₂SO₄, und/oder LiPO₃ und MY für B₂O₃, Al₂O₃, AlCl₃, MoO₃, WO₃, P₂O₅, P₂O₃, SiO₂, SiS₂, Si₂S₂, GeS₂, As₂O₅ und/oder Nb₂O₅ stehen.

Auf der allgemeinen chemischen Formel: LiX : MY basierende und insbesondere entsprechend der allgemeinen Formel: MX : M₂O : AₓO_{y} hergestellte Lithiumionen leitende Gläser werden beispielsweise in dem Review "Ion Conduction in Superionic Glassy Electrolytes" von A. Chandra, A. Bhatt,: An Overview in J. Mater. Sci. Technol., 2013, 29(3), 193-208 beschriebenen. Beispiele für Lithiumionen leitende Gläser der allgemeinen chemischen Formel: LiX : MY beziehungsweise MX : M₂O : AₓO_{y} sind 61 B₂O₃: 34,1 Li₂O : 4,9 LiI*,* 29,4 Li₂O : 58,8 SiO₂ : 11,7 Li₂SO₄, 2 Li₂S : 28 Si₂S₂ : 30 LiI, 37,5 SiS₂ : 37,5 Li₂S : 25 LiCl, 40 Li₂O : 8 Al₂O₃ : 52 B₂O₃, 50 Li₂S : 50 GeS₂, 80 LiWO_{3,5} : 20 LiCl, 40 Li₂O : 35 B₂O₃ : 25 LiNbO₃, 62 Li₂O : 38 SiO₂, 30 LiI : 41 Li2O : 29 P₂O₅ und 88 LiPO₃ : 12 AlCl₃.

Im Rahmen einer weiteren Ausführungsform ist der weitere Festkörperlithiumionenleiter ausgewählt aus der Gruppe der Lithium-Argyrodite. Lithium-Argyrodite zeichnen sich vorteilhafterweise durch besonders geringe Kontaktübergangswiderstände an den Korngrenzen innerhalb des Materials sowie zu weiteren Komponenten, beispielsweise einer Trockenbatterie, beispielsweise Elektrodenaktivmaterial, zum Beispiel Kathodenaktivmaterial beziehungsweise Anodenaktivmaterial, aus. So kann vorteilhafterweise eine besonders gute Ionenleitung an und innerhalb der Korngrenzflächen erzielt werden. Vorteilhafterweise können Lithium-Argyrodite auch ohne einen Sinterprozess einen geringen Übergangswiderstand zwischen Körnern aufweisen. Dies ermöglicht vorteilhafterweise nicht nur die Herstellung des Elektrodenmaterials sowie einer Zelle oder Batterie zu vereinfachen, sondern erweitert vorteilhafterweise auch die Palette von damit zusammen einsetzbaren Materialien.

Gegebenenfalls kann die Ionenleitung weiter durch eine Dotierung des mindestens einen Festkörperlithiumionenleiters verbessert werden. Beispielsweise kann die Dotierung über Diffusion von Dotieratomprekursorn, Implantation und/oder direkte Herstellung mit der richtigen "Dichte" an Dotanten erfolgen.

Im Rahmen einer weiteren Ausführungsform umfasst das Material oberflächenmodifizierte und/oder asphärische, den mindestens einen Festkörperlithiumionenleiter, beispielsweise ausgewählt aus der Gruppe der Lithium-Argyrodite und Lithiumionen leitenden Gläser, umfassende Partikel..

Die Oberflächenmodifizierung kann beispielsweise derart erfolgen, dass die den mindestens einen Festkörperlithiumionenleiter umfassenden Partikel eine elektrisch leitende und/oder Lithiumionen leitende Beschichtung und/oder eine Oberflächenstrukturierung aufweisen. Durch die elektrisch leitende und/oder Lithiumionen leitende Beschichtung und/oder Oberflächenstrukturierung können vorteilhafterweise Kontaktübergangswiderstände für Elektronen und/oder Lithiumionen reduziert werden.

Die Beschichtung kann beispielsweise Kohlenstoff, beispielsweise Graphit und/oder Kohlenstoffnanoröhrchen, umfassen oder daraus ausgebildet sein. Durch Kohlenstoff kann vorteilhafterweise eine elektrisch leitende Beschichtung bereitgestellt werden. Insbesondere kann die Beschichtung Lithium funktionalisierbaren beziehungsweise funktionalisierten, beispielsweise lithiierbaren beziehungsweise lithiierten, Kohlenstoff, zum Beispiel lithiierten Graphit und/oder lithiierte Kohlenstoffnanoröhrchen, umfassen. So kann die Beschichtung sowohl für Elektronen als auch für Lithiumionen leitend ausgestaltet werden.

Zum Beispiel können die Partikel beziehungsweise Partikelkerne aus dem mindestens einen Festkörperlithiumionenleiter, beispielsweise ausgewählt aus der Gruppe der Lithium-Argyrodite und Lithiumionen leitenden Gläser, ausgebildet sein und eine elektrisch leitende und/oder Lithiumionen leitende Beschichtung, beispielsweise aus - gegebenenfalls Lithium funktionalisierbaren beziehungsweise funktionalisierten - Kohlenstoff, und/oder eine Oberflächenstrukturierung aufweisen.

Es ist jedoch auch möglich, die Partikel beziehungsweise die Partikelkerne und die Beschichtung aus unterschiedlichen Festkörperlithiumionenleitern auszubilden.

Zum Beispiel können dabei die weiteren Festkörperlithiumionenleiter, insbesondere ausgewählt aus der Gruppe der Lithium-Argyrodite und Lithiumionen leitenden Gläser, umfassenden Partikel mindestens ein weiterer Festkörperlithiumionenleiter, zum Beispiel ausgewählt aus der Gruppe der Lithium-Argyrodite, Lithiumionen leitenden Gläser und Lithiumionen leitenden Keramiken, insbesondere mit Granat-Struktur, umfassen.

Im Rahmen einer Ausgestaltung ist dabei die Beschichtung aus dem mindestens einen Festkörperlithiumionenleiter, insbesondere ausgewählt aus der Gruppe der Lithium-Argyrodite und Lithiumionen leitenden Gläser, und die Partikel beziehungsweise Partikelkerne aus dem mindestens einen weiteren Festkörperlithiumionenleiter, zum Beispiel ausgewählt aus der Gruppe der Lithium-Argyrodite, Lithiumionen leitenden Gläser und Lithiumionen leitenden Keramiken, insbesondere mit Granat-Struktur, ausgebildet. Dies hat sich als besonders vorteilhaft herausgestellt, da durch Lithium-Argyrodite und Lithiumionen leitende Gläser Kontaktübergangswiderstände reduziert werden können, insbesondere wobei das Material der Partikel(kerne) aus einer breiten Materialpalette ausgewählt werden kann.

Die Oberflächenstrukturierung kann beispielsweise in Form von, insbesondere eingebrachten, Erhebungen und/oder Vertiefungen in der Partikeloberfläche ausgebildet sein. Beispielsweise kann die Oberflächenstrukturierung zur Ausbildung von klettverschlussartigen Verbindungen zwischen Partikeln ausgelegt sein. So kann vorteilhafterweise der Kontakt unter den Festkörperlithiumionenleiter umfassenden Partikel verbessert und auf diese Weise Kontaktübergangswiderstände, insbesondere für Lithiumionen, reduziert werden.

Unter asphärischen Partikeln können insbesondere Partikel mit einer von der Kugelform abweichenden Form verstanden werden. Zum Beispiel können asphärische Partikeln plättchenförmige Partikel und/oder stabförmige Partikel sein. Durch plättchenförmige Partikel kann vorteilhafterweise der Kontakt unter den Partikel verbessert und auf diese Weise Kontaktübergangswiderstände, insbesondere für Lithiumionen, reduziert werden. Durch plättchenförmige und insbesondere stabförmige Partikel kann vorteilhafterweise ein Lithiumionentransport über lange Strecken, insbesondere entlang der Längsache der Partikel, bewirkt und auf diese Weise die Lithiumionenleitung verbessert werden.

Im Rahmen einer weiteren Ausführungsform ist der mindestens eine organische, Binder ein polymerer Binder. Organische und insbesondere polymere Binder haben sich im Hinblick auf die mechanische Stabilität und Flexibilität des Elektrodenmaterials als besonders vorteilhaft erwiesen.

Grundsätzlich kann der mindestens eine, insbesondere organische, Binder sowohl Lithiumionen leitend als auch Lithiumionen nicht leitend sein. Gegebenenfalls kann der mindestens eine Binder einen intrinsischen Lithiumionenleiter umfassen oder ein solcher sein.

Beispielsweise kann dabei der mindestens eine Binder Polyethylenoxid (PEO) und/oder ein Polysaccharid (beziehungsweise Cellulosederivat), wie Polyglucosamin (Chitosan), und/oder Polyvinylidenfluorid (PVdF) umfassen oder sein.

Im Rahmen einer weiteren Ausführungsform ist der mindestens eine Binder Lithiumionen leitend. So kann vorteilhafterweise eine Komponente, welche ansonsten elektrochemisch passiv ist und keine Funktionalität im Rahmen der Energiespeicherung aufweist und beispielsweise nur zur Fixierung von Partikeln und/oder als Füllmaterial dient, elektrochemisch aktiv ausgestaltet werden. Dies ermöglicht es wiederum, vorteilhafterweise die Performance des Elektrodenmaterials beziehungsweise einer damit ausgestatteten Zelle zu verbessern sowie passive und gegebenenfalls auch andere Komponenten zu reduzieren und somit gegebenenfalls die Energiedichte zu erhöhen.

Im Rahmen einer Ausgestaltung dieser Ausführungsform ist der mindestens eine organische, Binder intrinsisch Lithiumionen leitend. Um intrinsisch nicht Lithiumionen leitende Binder, wie Polyethylenoxid (PEO) und/oder Polysaccharide (beziehungsweise Cellulosederivate), zum Beispiel Chitosan, und/oder Polyvinylidenfluorid (PVdF), mit einer Lithiumionenleitfähigkeit zu versehen oder die Lithiumionenleitfähigkeit eines intrinsischen Lithiumionen leitenden Binders zu erhöhen, kann der mindestens eine Binder jedoch auch mindestens ein Leitsalz, insbesondere Lithium-Leitsalz, umfassen.

Im Rahmen einer alternativen oder zusätzlichen Ausgestaltung dieser Ausführungsform umfasst daher der mindestens eine organische, Binder mindestens ein Leitsalz, insbesondere Lithium-Leitsalz. Beispielsweise kann das mindestens eine Leitsalz, ausgewählt sein aus der Gruppe, bestehend aus Lithiumhexafluorophosphat (LiPF₆), Lithium-Bis(trifluoromethylsulfonyl)imid (LiTFSI), Lithiumtetrafluoroborat (LiBF₄), Lithium-Bisoxalatoborat und Mischungen davon.

Im Rahmen einer weiteren Ausführungsform umfasst das Elektrodenmaterial weiterhin mindestens einen, insbesondere elektrisch und ionisch leitenden, Mischleiter. Mischleiter können vorteilhafterweise ein hohe ionische und elektrische Leitfähigkeit aufweisen. Die Verwendung von Mischleitern ermöglicht es daher vorteilhafterweise Komponenten, welche nur elektrisch leitend sind und beispielsweise zur Ausbildung von rein elektrisch leitenden Netzwerken für den Elektronentransport dienen, zum Beispiel elektrische Leitmaterialien, wie Graphit und/oder Leitruß, und/oder welche nur Ionen leitend sind, zum Beispiel Festkörperlithiumionenleiter, teilweise auszutauschen. Dies ermöglicht es wiederum vorteilhafterweise die Performance des Elektrodenmaterials beziehungsweise einer damit ausgestatteten Zelle zu verbessern sowie Komponenten zu reduzieren und somit gegebenenfalls die Energiedichte zu erhöhen.

Im Rahmen einer speziellen Ausgestaltung dieser Ausführungsform ist der mindestens eine Mischleiter ausgewählt aus der Gruppe der Lithiumtitanoxide, beispielsweise der allgemeinen chemischen Formel: LiₓTi_{y}O_{z}, vorzugsweise in einer Form mit gemischter Valenz der Ti-Ionen, beispielsweise als Li₇Ti₅O₁₂ mit gemischter Ti³⁺/Ti⁴⁺ Valenz oder in der Spinellform der allgemeinen chemischen Formel: Li₁₊ₓTi₂₋ₓO₄ mit 0 ≤ x ≤ 0,33, zum Beispiel mit einer mittleren Valenz von etwa 3,5. Derartige Lithiumtitanoxide können vorteilhafterweise eine hohe ionische und elektrische Leitfähigkeit aufweisen.

Gegebenenfalls können elektrische Leitmaterialien, wie Graphit und/oder Ruß, vollständig gegen den Mischleiter ausgetauscht werden.

Um beim Austausch von elektrischen Leitmaterialien gegen Mischleiter eine ausreichende elektrische Leitfähigkeit zu erzielen, kann es jedoch vorteilhaft sein, den oder die Mischleiter mit einem oder mehreren elektrischen Leitmaterialien zu kombinieren.

Durch den mindestens einen Mischleiter kann vorteilhafterweise der Anteil an elektrischen Leitmaterialien zumindest verringert werden.

Gegebenenfalls kann das Elektrodenmaterial weiterhin mindesten ein elektrisches Leitmaterial umfassen. So kann vorteilhafterweise der Elektronentransport in der Elektrode verbessert beziehungsweise sichergestellt werden.

Beispielsweise kann das mindestens eine elektrische Leitmaterial ein Material auf Kohlenstoffbasis sein. Zum Beispiel kann das mindestens eine elektrische Leitmaterial ausgewählt sein aus der Gruppe bestehend aus Graphit, Ruß, beispielsweise Leitruß (englisch: Carbon Black), Kohlenstoffnanoröhrchen (englisch: Carbon Nano Tubes; CNT) und Graphen.

Insbesondere kann das Elektrodenmaterial Partikel eines elektrischen Leitmaterials, zum Beispiel Graphit, mit einem durchschnittlichen Partikeldurchmesser von ≥ 2 µm, beispielsweise von ≥ 3 µm bis ≤ 20 µm, und Partikel eines elektrischen Leitmaterials, zum Beispiel Ruß/Leitruß, mit einem durchschnittlichen Partikeldurchmesser von ≤ 500 nm umfassen. Durch die unterschiedlichen Partikelgrößen kann das elektrische Leitmaterial mit dem großen durchschnittlichen Partikeldurchmesser, beispielsweise Graphit, die Rolle einer "Autobahn", sprich die elektrische Verbindung zwischen weiter entfernten Bereichen in der Elektrode, und das elektrische Leitmaterial mit dem kleineren durchschnittlichen Partikeldurchmesser, beispielsweise Ruß, die Rolle der lokalen elektrischen Anbindung auch der kleinsten Ecken und Winkel in der Elektrode übernehmen.

Eine weitere Optimierung der Ionenleitung kann durch das Zusammenspiel verschiedener Komponenten, insbesondere eine Optimierung der Verteilung der Komponenten, insbesondere des mindestens einen Festkörperlithiumionenleiters, erzielt werden.

Beispielsweise kann das Elektrodenmaterial sehr feine, den mindestens einen Festkörperlithiumionenleiter umfassende Partikel, beispielsweise mit einem durchschnittlichen Partikeldurchmesser von ≤ 500 nm, beispielsweise von ≤ 100 nm, beziehungsweise mit einer quasi-nulldimensionalen Partikelform, beispielsweise mit einem durchschnittlichen Partikeldurchmesser von ≤ 50 nm, und insbesondere einer sehr engen Partikelgrößenverteilung, beispielsweise ähnlich einem Kolloid, umfassen. So kann der Festkörperlithiumionenleiter vorteilhafterweise auch kleinste Räume besetzen und dadurch die Ionenleitung erhöhen.

Alternativ oder zusätzlich dazu kann das Elektrodenmaterial gröbere, den mindestens einen Festkörperlithiumionenleiter ausgewählt aus der Gruppe der Lithium-Argyrodite und Lithiumionen leitenden Gläser, umfassende Partikel, beispielsweise mit einem durchschnittlichen Partikeldurchmesser von ≥ 2 µm, beispielsweise von ≥ 3 µm bis ≤ 20 µm, mit einer schnelleren Ionenleitung über größere Strecken umfassen. Durch Zusatz von feineren, den mindestens einen Festkörperlithiumionenleiter umfassenden Partikel, beispielsweise mit einem durchschnittlichen Partikeldurchmesser von ≤ 500 nm, können dabei feinheitsbedingt langsameren, aber dafür lokal feiner verteilte Verbindungsleitungen erzielt werden.

Im Rahmen einer weiteren Ausführungsform umfasst daher das Material Partikel, welche den mindestens einen Festkörperlithiumionenleiter umfassen und einen durchschnittlichen Partikeldurchmesser von ≥ 2 µm,beispielsweise von ≥ 3 µm, zum Beispiel bis ≤ 20 µm, aufweisen, sowie Partikel, welche den mindestens einen Festkörperlithiumionenleiter umfassen und einen durchschnittlichen Partikeldurchmesser von ≤ 500 nm, beispielsweise von ≤ 100 nm, aufweisen. Insbesondere kann dabei das Material eine zumindest bimodale Verteilung von den mindestens einen Festkörperlithiumionenleiter umfassenden Partikeln aufweisen. Durch die unterschiedlichen Partikelgrößen kann der mindestens eine Festkörperlithiumionenleiter mit dem großen durchschnittlichen Partikeldurchmesser die Rolle einer "Autobahn", sprich die ionische Verbindung zwischen weiter entfernten Bereichen in der Elektrode, und der mindestens eine Festkörperlithiumionenleiter mit dem kleinen durchschnittlichen Partikeldurchmesser die Rolle der lokalen ionisch Anbindung auch der kleinsten Ecken und Winkel in der Elektrode übernehmen. Der mindestens eine Festkörperlithiumionenleiter mit dem großen durchschnittlichen Partikeldurchmesser kann dabei zwar grundsätzlich aus einem anderen Stoff ausgebildet sein als der mindestens eine Festkörperlithiumionenleiter mit dem kleinen durchschnittlichen Partikeldurchmesser, vorzugsweise sind der mindestens eine Festkörperlithiumionenleiter mit dem großen durchschnittlichen Partikeldurchmesser und der mindestens eine Festkörperlithiumionenleiter mit dem kleinen durchschnittlichen Partikeldurchmesser jedoch aus dem gleichen Stoff, beispielsweise ausgewählt aus der Gruppe der Lithium-Argyrodite und Lithiumionen leitenden Gläser, zum Beispiel ausgewählt aus der Gruppe der Lithium-Argyrodite, ausgebildet. So können vorteilhafterweise Übergangswiderstände minimiert und die Ionenleitung zwischen den beiden Festkörperlithiumionenleitern optimiert werden.

Alternativ oder zusätzlich dazu kann das Elektrodenmaterial Festkörperlithiumionenleiter mit unterschiedlichen Partikelformen umfassen.

Zum Beispiel kann das Elektrodenmaterial mindestens einen Festkörperlithiumionenleiter mit einer zweidimensionalen Partikelform (2D-Flakes) und/oder mindestens einen Festkörperlithiumionenleiter mit einer eindimensionalen Partikelform (1D-Stäbe) und/oder mindestens einen Festkörperlithiumionenleiter mit einer quasi-nulldimensionalen Partikelform (feines Pulver) umfassen. Festkörperlithiumionenleiter mit derartigen Partikelformen können beispielsweise über Mahl-, Gasphasen- und/oder Flüssigphasen-Prozesse hergestellt werden.

Dabei ist es möglich keine Festkörperlithiumionenleiter mit einer quasi-nulldimensionalen Partikelform, sondern nur Festkörperlithiumionenleiter mit einer zweidimensionalen und/oder eindimensionalen Partikelform zu verwenden.

Insbesondere können jedoch Festkörperlithiumionenleitern mit einer zweidimensionalen und/oder eindimensionalen und/oder quasi-nulldimensionalen Partikelform miteinander kombiniert werden.

Durch die unterschiedlichen Partikelformen können beispielsweise der mindestens eine Festkörperlithiumionenleiter mit einer zweidimensionalen Partikelform und/oder der mindestens eine Festkörperlithiumionenleiter mit einer eindimensionalen Partikelform, die Rolle der "Autobahn", sprich die ionische Verbindung zwischen weiter entfernten Bereichen in der Elektrode, und gegebenenfalls der mindestens eine Festkörperlithiumionenleiter mit einer quasi-nulldimensionalen Partikelform die Rolle der lokalen ionischen Anbindung auch der kleinsten Ecken und Winkel in der Elektrode übernehmen.

Der mindestens eine Festkörperlithiumionenleiter mit einer zweidimensionalen Partikelform und/oder der mindestens eine Festkörperlithiumionenleiter mit einer eindimensionalen Partikelform und/oder der mindestens eine Festkörperlithiumionenleiter mit einer quasi-nulldimensionalen Partikelform können dabei zwar grundsätzlich aus unterschiedlichen Stoffen ausgebildet sein. Vorzugsweise sind der mindestens eine Festkörperlithiumionenleiter mit einer zweidimensionalen Partikelform und/oder der mindestens eine Festkörperlithiumionenleiter mit einer eindimensionalen Partikelform und/oder der mindestens eine Festkörperlithiumionenleiter mit einer quasi-nulldimensionalen Partikelform jedoch aus dem gleichen Stoff, beispielsweise ausgewählt aus der Gruppe der Lithium-Argyrodite und Lithiumionen leitenden Gläser, zum Beispiel ausgewählt aus der Gruppe der Lithium-Argyrodite, ausgebildet. So können vorteilhafterweise Übergangswiderstände minimiert und die Ionenleitung zwischen den beiden Festkörperlithiumionenleitern optimiert werden.

Im Rahmen einer weiteren Ausführungsform ist ein weiterer Festkörperlithiumionenleiter, beispielsweise ausgewählt aus der Gruppe der Lithium-Argyrodite und Lithiumionen leitenden Gläser, zum Beispiel ausgewählt aus der Gruppe der Lithium-Argyrodite, in Form eines lonenleiter-Busses ausgebildet, welcher in das mindestens eine Elektrodenaktivmaterial, beispielsweise Kathodenaktivmaterial oder Anodenaktivmaterial, eingebettet ist.

Unter einem lonenleiter-Bus kann insbesondere eine lonentransport- und/oder - verteilerstruktur, beispielsweise ein lonentransport- und/oder -verteilernetzwerk, verstanden werden, insbesondere welche/s gezielt hervorgerufen oder angelegt ist.

Beispielsweise kann der lonenleiter-Bus ein eindimensionaler Bus (1D-Bus) in Form eines Waldes aus einzelnen, beispielsweise stehenden, zum Beispiel vertikalen, Stäben (Rods) und/oder Nanodrähten (Nanowires) aus dem mindestens einen Festkörperlithiumionenleiter sein. So kann zum Beispiel ein, insbesondere direkter, Ionentransport durch das Elektrodenmaterial, beispielsweise zwischen einem Kathodenstromkollektor und einem Lithiumionen leitenden Festkörperelektrolytseparator, realisiert werden.

Der lonenleiter-Bus kann jedoch auch ein zweidimensionaler Bus (2D-Bus) in Form von teilweise quervernetzten Stäben (Rods), Nanodrähten (Nanowires) und/oder Stegen, beispielsweise mit gewisser Breite, aus dem mindestens einen Festkörperlithiumionenleiter sein. So kann vorteilhafterweise eine verbesserte Anbindung des Elektrodenmaterials, beispielsweise Kathodenaktivmaterials oder Anodenaktivmaterials, an den lonenleiter erzielt werden.

Insbesondere kann der lonenleiter-Bus ein dreidimensionaler Bus (3D-Bus) in Form eines vollständig quervernetzten Netzwerks, beispielsweise aus Stäben (Rods), Nanodrähten (Nanowires) und/oder Stegen, beziehungsweise eines Schwamms aus dem mindestens einen Festkörperlithiumionenleiter sein. So kann vorteilhafterweise eine besonders gute Anbindung des Elektrodenmaterials an den lonenleiter erzielt werden.

Ein derartiger dreidimensionaler lonenleiter-Bus kann beispielsweise aus einer Masse ausgebildet werden, welche Partikeln mindestens eines, zur sinterfreien Ausbildung eines Lithiumionen leitenden Netzwerks ausgelegten, anorganischen Materials, beispielsweise Lithium-Argyrodit, und mindestens einen Binder umfasst.

Im Rahmen einer weiteren Ausführungsform ist daher das Elektrodenmaterial aus einer Masse ausgebildet, welche Partikel mindestens eines, zur sinterfreien Ausbildung eines Lithiumionen leitenden Netzwerks ausgelegten, anorganischen Materials, beispielsweise Lithium-Argyrodit, und mindestens einen, insbesondere organischen, Binder umfasst. Weiterhin kann die Masse noch eine oder mehrere der vorstehend erläuterten Elektrodenmaterial-Komponenten umfassen.

Unter einem zur sinterfreien Ausbildung eines Lithiumionen leitenden Netzwerks ausgelegten, anorganischen Material kann insbesondere ein anorganisches Material verstanden werden, aus dessen Partikeln ein Lithiumionen leitendes Netzwerk, insbesondere mit einer Lithiumionenleitfähigkeit von >10⁻⁵ S/cm, vorzugsweise von ≥10⁻⁴ S/cm oder ≥10⁻³ S/cm, auch bei Temperaturen von unter 1000 °C, beispielsweise von ≤ 600 °C, ausgebildet werden kann.

Insbesondere kann dabei das Elektrodenmaterial bei Temperaturen von unter 1000 °C, beispielsweise von ≤ 600 °C, zum Beispiel von ≤ 100 °C, und insbesondere ungesintert, ausgebildet sein. Zum Beispiel kann das Elektrodenmaterial durch Verdichten, beispielsweise Pressen, zum Beispiel durch einen Press-Schmelz-Vorgang, der Masse ausgebildet sein.

Insbesondere kann das mindestens eine, zur sinterfreien Ausbildung eines Lithiumionen leitenden Netzwerks ausgelegte, anorganische Material, ausgewählt sein aus der Gruppe der Lithium-Argyrodite. Lithium-Argyrodite haben sich für ein derartiges Herstellungsverfahren als besonders vorteilhaft erwiesen.

Das Elektrodenmaterial kann vorteilhafterweise durch ein derartiges Verfahren kostengünstig hergestellt werden und insbesondere geringe Korngrenzenübergangswiderstände und damit eine gute Ionenleitung aufweisen.

Ein dreidimensionaler lonenleiter-Bus kann jedoch auch durch selbstorganisiertes Netzwerk-Wachstum; (Rück-)Ätzen von Poren in einer kompakten Elektrode, Füllen von Poren in einer Elektrodenmatrix mit Festkörperlithiumionenleiter und gegebenenfalls Mischleiter und gegebenenfalls Aushärten, zum Beispiel mittels UV-Strahlung, Temperatur oder chemischen Additiven; galvanisches Aufwachsen durch ein Porennetzwerk; und/oder Füllen von Poren mittels Gasphasenprozessen, zum Beispiel chemische Gasphasenabscheidung (CVD) und/oder Atomlagenabscheidung (ALD), mit Festkörperlithiumionenleiter und gegebenenfalls Mischleiter; hergestellt werden.

Gegebenenfalls kann das Elektrodenmaterial, insbesondere nachträglich, lokal, mit einer flüssigen Komponente, zum Beispiel einer ionische Flüssigkeit (englisch: lonic Liquid), Flüssigelektrolyt, et cetera, getränkt sein.

Im Rahmen einer weiteren Ausführungsform ist das Elektrodenmaterial unter Verwendung eines Aerosolabscheideverfahrens ausgebildet. So können vorteilhafterweise kompakte Schichten, geringe Übergangswiderstände und eine hohe Ionenleitung durch ein einfaches und insbesondere lösungsmittelfreies, und damit energetisch günstiges und verunreinungsarmes, Verfahren erzielt werden.

Gegebenenfalls kann das Elektrodenmaterial jedoch auch eine Druckpaste zur Herstellung einer Kathode mittels einer Drucktechnik oder aus einer solchen ausgebildet sein.

Im Rahmen einer weiteren Ausführungsform umfasst das Elektrodenmaterial weiterhin mindestens einen weiteren Festkörperlithiumionenleiter. Der mindestens eine weitere Festkörperlithiumionenleiter kann beispielsweise ausgewählt sein aus der Gruppe der Lithium-Argyrodite, Lithiumionen leitenden Gläser und Lithiumionen leitenden Keramiken, insbesondere mit Granatstruktur.

Darüber hinaus ist es möglich, dass das Elektrodenmaterial oberflächenmodifizierte und/oder asphärische, das mindestens eine Elektrodenaktivmaterial umfassende Partikel umfasst. Die oberflächenmodifizierten und/oder asphärischen, das mindestens eine Elektrodenaktivmaterial umfassenden Partikel können analog zu den bereits erläuterten, oberflächenmodifizierten und/oder asphärischen, den mindestens einen Festkörperlithiumionenleiter umfassenden Partikel ausgebildet werden.

Im Rahmen einer Ausgestaltung umfasst das Elektrodenmaterial Partikel des mindestens einen Elektrodenaktivmaterials, welche mit einer elektrisch leitenden und/oder Lithiumionen leitenden Beschichtung versehen sind. Die Beschichtung kann dabei beispielsweise den mindestens einen Festkörperlithiumionenleiter und/oder Kohlenstoff umfassen oder daraus ausgebildet sein. Zum Beispiel kann das mindestens eine Elektrodenaktivmaterial mit dem mindestens einen Festkörperlithiumionenleiter und/oder Kohlenstoff beschichtet sein.

Alternativ oder zusätzlich zur Beschichtung können die Partikel eine Oberflächenstrukturierung aufweisen. Die die Oberflächenstrukturierung kann dabei zur Ausbildung von klettverschlussartigen Verbindungen zwischen Partikeln ausgelegt sein.

Durch die vorstehenden Maßnahmen kann vorteilhafterweise die elektrische und/oder ionische Anbindung des Elektrodenaktivmaterials verbessert und die Langzeitstabilität und Performance weiter gesteigert werden.

Im Rahmen einer Ausführungsform ist das Material ein Kathodenmaterial. Insbesondere kann dabei das mindestens eine lithiierbare Elektrodenaktivmaterial ein lithiierbares Kathodenaktivmaterial sein.

Im Rahmen einer speziellen Ausgestaltung ist das mindestens eine Kathodenaktivmaterial ein mit Lithiumionen interkalierbares Kathodenaktivmaterial.

Zum Beispiel kann das mindestens eine Kathodenaktivmaterial Lithium-Mangan-Spinell (LiMn₂O₄), Lithiumcobaltoxid (LiCoO₂), Lithiumeisenphosphat (LiFePO₄) und/oder Nickel-, Mangan-, Cobalt- und/oder Aluminium-Gemische verschiedenster Zusammensetzung umfassen oder daraus ausgebildet sein.

Im Rahmen einer Ausgestaltung umfasst oder ist das mindestens eine Kathodenaktivmaterial jedoch ein Lithium-Spinell von Mangan und/oder Cobalt und/oder Nickel, beispielsweise Lithium-Mangan-Spinell (LiMn₂O₄), und/oder ein Lithium -Cobalt- und/oder -Mangan- und/oder -Nickel- und/oder -Aluminium-Oxid, beispielsweise Lithiumcobaltoxid (LiCoO₂). Lithium-Spinelle und Lithium-Oxide weisen vorteilhafterweise, beispielsweise im Gegensatz zu Lithiumeisenphosphat (LiFePO₄), auch eine gute ionische (Durch-)Leitfähigkeit, insbesondere für Lithiumionen, auf. So kann die Ionenleitung und damit die Langzeitstabilität und Performance vorteilhafterweise weiter optimiert werden. Lithium-Mangan-Spinell ist vorteilhafterweise besonders kostengünstig und umweltverträglich. Lithiumcobaltoxid zeichnet sich durch eine besonders hohe Energiedichte aus.

Im Rahmen einer Ausgestaltung ist das mindestens eine Kathodenaktivmaterial mit Kohlenstoff und/oder mit Festkörperlithiumionenleiter, beispielsweise dem mindestens einen Festkörperlithiumionenleiter, beschichtet. So können vorteilhafterweise Übergangswiderstände weiter reduziert und die Ionenleitung weiter optimiert werden.

Im Rahmen einer anderen Ausführungsform ist das Material ein Anodenmaterial. Dabei kann das mindestens eine lithiierbare Elektrodenaktivmaterial insbesondere ein lithiierbares Anodenaktivmaterial sein. Beispielsweise kann das mindestens eine lithiierbare Anodenaktivmaterial ein mit Lithiumionen interkalierbares Anodenaktivmaterial, zum Beispiel Graphit, sein.

Hinsichtlich weiterer technischer Merkmale und Vorteile des erfindungsgemäßen Elektrodenmaterials wird hiermit explizit auf die Erläuterungen im Zusammenhang mit der erfindungsgemäßen Zelle, der erfindungsgemäßen Batterie und der erfindungemäßen Verwendung sowie auf die Figuren und die Figurenbeschreibung verwiesen.

Weitere Gegenstände der Erfindung sind eine Lithium-Zelle beziehungsweise eine Lithium-Batterie, umfassend ein erfindungsgemäßes Elektrodenmaterial. Die erfindungsgemäße Batterie kann insbesondere eine oder mehrere erfindungsgemäße Zellen umfassen.

Die Zelle kann insbesondere eine Kathode (positive Elektrode) und eine Anode (negative Elektrode) umfassen.

Die Kathode kann beispielsweise ein erfindungsgemäßes Elektrodenmaterial, insbesondere Kathodenmaterial, umfassen oder daraus ausgebildet sein.

Alternativ oder zusätzlich kann die Anode ein erfindungsgemäßes Elektrodenmaterial, insbesondere Anodenmaterial, umfassen oder daraus ausgebildet sein.

Die Lithium-Zelle kann beispielsweise eine Lithium-Ionen-Zelle oder Lithium-Metall-Zelle beziehungsweise die Lithium-Batterie eine Lithium-Ionen-Batterie oder Lithium-Metall-Batterie sein. Die Lithium-Zelle kann insbesondere eine Lithium-Ionen-Zelle beziehungsweise die Lithium-Batterie eine Lithium-Ionen-Batterie sein.

Im Rahmen einer Ausführungsform ist die Lithium-Zelle eine Trockenbatteriezellle (englisch: All Solid State Cell) und/oder die Lithium-Batterie eine Trockenbatterie (englisch: All Solid State Battery).

Alternativ oder zusätzlich kann die Lithium-Zelle beispielsweise als Dünnschichtbatteriezelle beziehungsweise die Lithium-Batterie als Dünnschichtbatterie ausgeführt sein. Es ist jedoch ebenso möglich die Zelle als Pouch-Zelle auszuführen.

Im Rahmen einer weiteren Ausführungsform ist zwischen der Kathode und der Anode ein Lithiumionen leitender Festkörperelektrolyt angeordnet, welcher mindestens einen Festkörperlithiumionenleiter, insbesondere den mindestens einen Festkörperlithiumionenleiter des Elektrodenmaterials der Kathode (Kathodenmaterial) und/oder der Anode (Anodenmaterial) umfasst beziehungsweise daraus ausgebildet ist. Durch eine Ausbildung des Lithiumionen leitenden Festkörperelektrolyten aus dem mindestens einen Festkörperlithiumionenleiter des Elektrodenmaterials, beispielsweise ausgewählt aus der Gruppe der Lithium-Argyrodite und Lithiumionen leitenden Gläser, zum Beispiel ausgewählt aus der Gruppe der Lithium-Argyrodite, können vorteilhafterweise Übergangswiderstände weiter verringert und die Ionenleitung weiter optimiert werden.

Weiterhin kann die Zelle einen Anodenstromkollektor, beispielsweise aus Kupfer, und einen Kathodenstromkollektor, beispielsweise aus Aluminium, aufweisen.

Hinsichtlich weiterer technischer Merkmale und Vorteile der erfindungsgemäßen Zelle beziehungsweise Batterie wird hiermit explizit auf die Erläuterungen im Zusammenhang mit dem erfindungsgemäßen Elektrodenmaterial und der erfindungemäßen Verwendung sowie auf die Figuren und die Figurenbeschreibung verwiesen.

Ferner betrifft die Erfindung die Verwendung des erfindungsgemäßen Elektrodenmaterials beziehungsweise der erfindungsgemäßen Zelle und/oder Batterie.

Beispielsweise kann das Elektrodenmaterial, die Zelle und/oder die Batterie zum Betrieb bei erhöhten Temperaturen, beispielsweise von ≥ 80 °C, verwendet werden. So können vorteilhafterweise Übergangswiderstände und die lonenleitfähigkeit weiter verbessert werden. Bei erhöhten Temperaturen können vorteilhafterweise zum Beispiel unscharfe Phasenübergänge, zum Beispiel Fest/Flüssig, geschehen, Grenzflächenwiderstände abgebaut werden und/oder Bulk-Leitfähigkeiten stark verbessert sein.

Insbesondere kann das Elektrodenmaterial, die Zelle und/oder die Batterie, beispielsweise als Mikrobatterie, für einen autonomen Sensor verwendet werden.

Die Zelle und/oder Batterie kann jedoch auch größer skaliert sein in makroskopischen Anwendungen, beispielsweise für ein Mobilgerät, wie Mobilfunkgeräte, zum Beispiel Handys, und/oder für ein Elektrofahrzeug und/oder einen Heimspeicher verwendet werden.

Hinsichtlich weiterer technischer Merkmale und Vorteile der erfindungsgemäßen Verwendung wird hiermit explizit auf die Erläuterungen im Zusammenhang mit dem erfindungsgemäßen Elektrodenmaterial, der erfindungsgemäßen Zelle und der erfindungsgemäßen Batterie sowie auf die Figuren und die Figurenbeschreibung verwiesen.

### Zeichnungen

Weitere Vorteile und vorteilhafte Ausgestaltungen der erfindungsgemäßen Gegenstände werden durch die Zeichnungen veranschaulicht und in der nachfolgenden Beschreibung erläutert. Dabei ist zu beachten, dass die Zeichnungen nur beschreibenden Charakter haben und nicht dazu gedacht sind, die Erfindung in irgendeiner Form einzuschränken. Es zeigen
- Fig. 1: einen schematischen Querschnitt durch eine Ausführungsform einer erfindungsgemäßen Zelle als Pouch-Zelle;
- Fig. 2: einen schematischen Querschnitt durch eine Ausführungsform einer erfindungsgemäßen Zelle als Dünnschichtbatteriezelle, und
- Fig.3: eine stark vergrößerte, schematische Darstellung einer Ausführungsform des Kathodenmaterials der in Fig. 1 und 2 gezeigten Zelle.

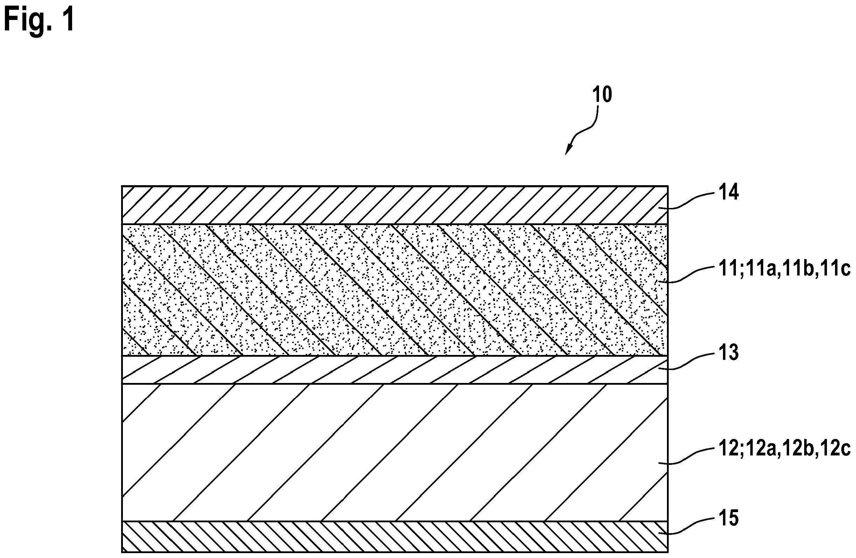

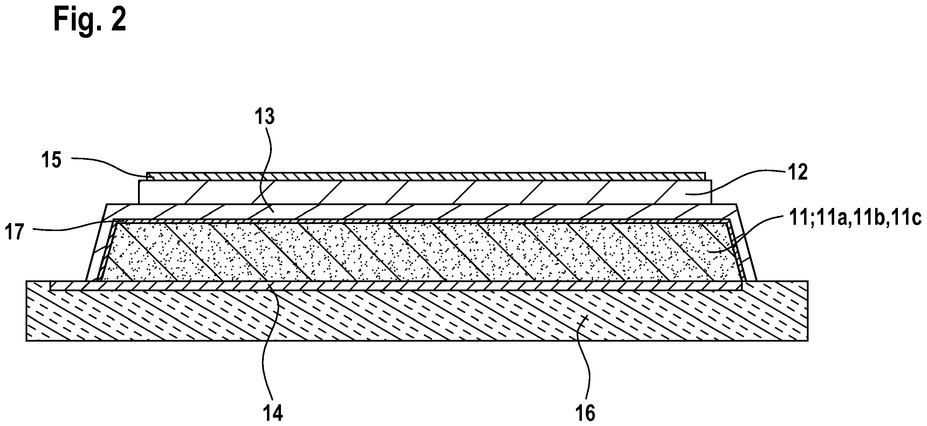

Die Figuren 1 und 2 zeigen Zellen 10, welche eine Kathode 11, eine Anode 12 und einen zwischen der Kathode 11 und der Anode 12 angeordneten Lithiumionen leitenden Festkörperelektrolyten 13 umfassen. Die Figuren 1 und 2 zeigen, dass dabei jeweils die Kathode 11 einen Kathodenstromkollektor 14, beispielsweise aus Aluminium, und die Anode 12 einen Anodenstromkollektor 15, beispielsweise aus Kupfer, aufweist.

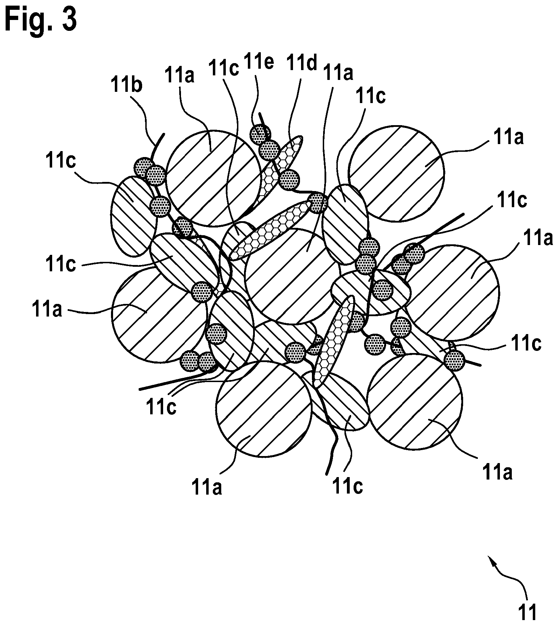

Wie im Zusammenhang mit der in Figur 3 gezeigten Ausführungsform detaillierter dargestellt, kann bei den in den Figuren 1 und 2 gezeigten Zellen 10 insbesondere die Kathode 11 aus einem Kathodenmaterial 11 ausgebildet sein, welches ein lithiierbares Kathodenaktivmaterial 11a, einen organischen Binder 11b und einen Festkörperlithiumionenleiter 11c umfasst. Alternativ oder zusätzlich kann die Anode 12 aus einem Anodenmaterial 12 ausgebildet sein, welches ein lithiierbares Anodenaktivmaterial 12a, einen organischen Binder 12b und einen Festkörperlithiumionenleiter 12c umfasst. Der Festkörperelektrolyt 13 kann insbesondere den Festkörperlithiumionenleiter 11c,12c des Kathodenmaterials 11 beziehungsweise Anodenmaterials 12 umfassen beziehungsweise daraus ausgebildet sein.

Der Festkörperlithiumionenleiter 11c,12c der Kathode 11 und/oder Anode 12 und/oder des Festkörperelektrolyten 13 kann insbesondere ausgewählt sein aus der Gruppe der Lithium-Argyrodite und Lithiumionen leitenden Gläser, beispielsweise der Schwefelgläser, Phosphatgläser, Germaniumgläser und/oder Lithiumionen leitenden Gläser der allgemeinen chemischen Formel: LiX : MY, wobei LiX für LiCl, LiBr, LiI, Li₂O, Li₂S, Li₂SO₄, und/oder LiPO₃ und MY für B₂O₃, Al₂O₃, AlCl₃, MoO₃, WO₃, P₂O₅, P₂O₃, SiO₂, SiS₂, Si₂S₂, GeS₂, As₂O₅ und/oder Nb₂O₅ steht. Insbesondere kann der mindestens eine Festkörperlithiumionenleiter 11c,12c der Kathode 11 und/oder Anode 12 und/oder des Festkörperelektrolyten 13 ausgewählt sein aus der Gruppe der Lithium-Argyrodite.

Die Strukturierung der Kathode 11 in Figur 1 und 2 deutet ferner an, dass durch den Festkörperlithiumionenleiter 11c ein vollständig quervernetzter Ionenleiter-Bus in der Kathode 11 ausgebildet werden kann.

Im Rahmen der in Figur 1 gezeigten Ausführungsform ist die Zelle 10 als Pouch-Zelle ausgeführt.

Im Rahmen der in Figur 2 gezeigten Ausführungsform ist die Zelle 10 als Dünnschichtbatteriezelle ausgeführt. Dabei ist die Kathode 11 auf einem Substrat 16, beispielsweise einem Halbleitersubstrat, zum Beispiel aus Silicium, oder einem Polymersubstrat, aufgebracht. Figur 2 zeigt weiterhin, dass zwischen dem Kathodenmaterial 11 und dem Festkörperelektrolyten 13 eine Übergangsschicht 17, zum Beispiel aus einem weiteren Festkörperlithiumionenleiter oder einer Mischung aus Festkörperlithiumionenleitern ausgebildet sein kann, um eine Übergangswiderstandsminimierung zu erzielen. Insofern der Festkörperelektrolyt 13 aus dem Festkörperlithiumionenleiter 11c des Kathodenmaterials 11 beziehungsweise aus dem Festkörperlithiumionenleiter 12c des Anodenmaterials 12 ausgebildet ist, kann auf die Übergangsschicht gegebenenfalls verzichtet werden.

Figur 3 ist eine stark vergrößerte, schematische Darstellung einer Ausführungsform des Kathodenmaterials 11 der in Figur 1 und 2 gezeigten Zellen 10. Figur 3 zeigt, dass das Kathodenmaterial 11 ein mit Lithiumionen interkalierbares Kathodenaktivmaterial 11a, einen organischen Binder 11b und einen Festkörperlithiumionenleiter 11c umfasst.

Das Kathodenaktivmaterial 11a kann beispielsweise Lithium-Mangan-Spinell und/oder Lithiumcobaltoxid sein.

Der Binder 11b kann insbesondere Lithiumionen leitend sein. Beispielsweise kann der Binder 11b mindestens ein Lithium-Leitsalz umfassen und/oder intrinsisch Lithiumionen leitend sein.

Der Festkörperlithiumionenleiter 11c kann insbesondere ausgewählt sein aus der Gruppe der Lithium-Argyrodite und Lithiumionen leitenden Gläser, beispielsweise der Lithium-Argyrodite.

Figur 3 veranschaulicht, dass das Kathodenmaterial 11 weiterhin ein elektrisches Leitmaterial 11d mit einem großen durchschnittlichen Partikeldurchmesser, zum Beispiel Graphit, und ein elektrisches Leitmaterial 11e mit einem kleinen durchschnittlichen Partikeldurchmesser, zum Beispiel Ruß/Leitruß, umfassen kann. Alternativ oder zusätzlich kann ein Elektronentransport auch durch einen elektrisch und ionisch leitenden Mischleiter (nicht dargestellt) sichergestellt werden.

## Patentansprüche

1. Elektrodenmaterial (11, 12) für eine Lithium-Zelle (10) umfassend
- mindestens ein lithiierbares Elektrodenaktivmaterial (11a, 12a),
- mindestens einen organischen Binder (11b, 12b) und
- mindestens einen Festkörperlithiumionenleiter (11c, 12c) in Form eines Lithiumionen leitenden Glases basierend auf der allgemeinen chemischen Formel: LiX:MY,
wobei LiX für LiCI, LiBr und MY für MoO3, WO3, P2O3,As2O5 und/oder Nb2O5 steht.

2. Material nach Anspruch 1, **dadurch gekennzeichnet, dass** der mindestens eine Festkörperlithiumionenleiter (11c, 12c) zusätzlich einen Lithium-Argyrodit, ein Schwefelglas, ein Phosphatglas, ein Germaniumglas und/oder ein Lithiumionen leitendes Glas, basierend auf der allgemeinen chemischen Formel:
LiX:MY umfasst, wobei LiX für Li₂O, Li₂S, Li₂SO₄ und/oder LiPO₃ steht und MY für Al2O3, AlCl₃, P₂O₅, SiS₂, Si₂S₂, und/oder GeS₂ steht.

3. Material (11,12) nach Anspruch 1 oder 2, wobei der mindestens eine Festkörperlithiumionenleiter (11c,12c) ausgewählt ist aus der Gruppe der Lithium-Argyrodite.

4. Material (11,12) nach einem der Ansprüche 1 bis 3, wobei das Material (11,12) oberflächenmodifizierte und/oder asphärische, den mindestens einen Festkörperlithiumionenleiter (11c,12c) umfassende Partikel umfasst.

5. Material (11,12) nach Anspruch 4,
wobei die den mindestens einen Festkörperlithiumionenleiter (11c,12c) umfassenden Partikel eine elektrisch leitende und/oder Lithiumionen leitende Beschichtung aufweisen, wobei die Beschichtung den mindestens einen Festkörperlithiumionenleiter (11c,12c) und/oder Kohlenstoff umfasst.

6. Material (11,12) nach einem der Ansprüche 1 bis 5, wobei das Material den mindestens einen Festkörperlithiumionenleiter (11c,12c) umfassende Partikel mit einem durchschnittlichen Partikeldurchmesser von größer oder gleich 2 µm und den mindestens einen Festkörperlithiumionenleiter (11c,12c) umfassende Partikel mit einem durchschnittlichen Partikeldurchmesser von kleiner oder gleich 500 nm umfasst.

7. Material (11,12) nach einem der Ansprüche 1 bis 6, wobei der mindestens eine organische Binder (11b,12b) Lithiumionen leitend ist, insbesondere wobei der mindestens eine Binder (11b,12b) mindestens ein Lithium-Leitsalz umfasst und/oder intrinsisch Lithiumionen leitend ist.

8. Material (11,12) nach einem der Ansprüche 1 bis 7, wobei das Material (11,12) weiterhin mindestens einen Mischleiter umfasst, insbesondere wobei der mindestens eine Mischleiter ausgewählt ist aus der Gruppe der Lithiumtitanoxide.

9. Material (11,12) nach einem der Ansprüche 1 bis 8, wobei das Material (11,12) Partikel des mindestens einen Elektrodenaktivmaterials (11a,12a) umfasst, welche mit einer elektrisch leitenden und/oder Lithiumionen leitenden Beschichtung versehen sind, welche den mindestens einen Festkörperlithiumionenleiter (11c,12c) und/oder Kohlenstoff umfasst.

10. Material (11,12) nach einem der Ansprüche 1 bis 9, wobei das Material (11,12) ein Kathodenmaterial (11) und das mindestens eine lithiierbare Elektrodenaktivmaterial (11a,12a) ein lithiierbares Kathodenaktivmaterial (11a) ist.

11. Material (11,12) nach Anspruch 10, wobei das mindestens eine Kathodenaktivmaterial (11a) ein mit Lithiumionen interkalierbares Kathodenaktivmaterial ist, insbesondere wobei das mindestens eine Kathodenaktivmaterial (11a) ein Lithium-Spinell von Mangan und/oder ein Lithium-Cobalt- und/oder -Mangan- und/oder -Nickel- und/oder Aluminium-Oxid umfasst.

12. Material (11,12) nach einem der Ansprüche 1 bis 11, wobei das Material (11,12) ein Anodenmaterial (12) und das mindestens eine lithiierbare Elektrodenaktivmaterial (11a,12a) ein lithiierbares Anodenaktivmaterial (12a), insbesondere ein mit Lithiumionen interkalierbares Anodenaktivmaterial (12a), ist.

13. Lithium-Zelle (10), umfassend mindestens ein Elektrodenmaterial (11,12) nach einem der Ansprüche 1 bis 12.

14. Lithium-Zelle (10) nach Anspruch 13, wobei die Zelle (10) eine Trockenbatteriezelle ist.

15. Lithium-Zelle (10) nach Anspruch 13 oder 14, wobei die Zelle (10) eine Kathode (11) und eine Anode (12) umfasst, wobei die Kathode (11) ein Material nach Anspruch 10 oder 11 und/oder die Anode (12) ein Material nach Anspruch 12 umfasst, wobei zwischen der Kathode (11) und der Anode (12) ein Lithiumionen leitender Festkörperelektrolyt (13) angeordnet ist, welcher (13) mindestens einen Festkörperlithiumionenleiter (11c,12c), ausgewählt aus der Gruppe der Lithium-Argyrodite und Lithiumionen leitenden Gläser, umfasst.

## Claims

1. Electrode material (11, 12) for a lithium cell (10) comprising
- at least one lithiatable electrode active material (11a, 12a),
- at least one organic binder (11b, 12b) and
- at least one solid-state lithium ion conductor (11c, 12c) in the form of a lithium ion-conducting glass based on the general chemical formula: LiX:MY,
where LiX is LiCl, LiBr and MY is MoO₃, WO₃, P₂O₃, AS₂O₅ and/or Nb₂O₅.

2. Material according to Claim 1, **characterized in that** the at least one solid-state lithium ion conductor (11c, 12c) additionally comprises a lithium argyrodite, a sulfur glass, a phosphate glass, a germanium glass and/or a lithium ion-conducting glass based on the general chemical formula: LiX:MY, where LiX is Li₂O, Li₂S, Li₂SO₄ and/or LiPO₃ and MY is Al₂O₃, AlCl₃, P₂O₅, SiS₂, Si₂S₂ and/or GeS₂.

3. Material (11, 12) according to Claim 1 or 2, wherein the at least one solid-state lithium ion conductor (11c, 12c) is selected from the group of lithium argyrodites.

4. Material (11, 12) according to any of Claims 1 to 3, wherein the material (11, 12) comprises surface-modified and/or aspherical particles comprising the at least one solid-state lithium ion conductor (11c, 12c).

5. Material (11, 12) according to Claim 4, wherein the particles comprising the at least one solid-state lithium ion conductor (11c, 12c) have an electrically conductive and/or lithium ion-conducting coating, where the coating comprises the at least one solid-state lithium ion conductor (11c, 12c) and/or carbon.

6. Material (11, 12) according to any of Claims 1 to 5, wherein the material comprises particles comprising the at least one solid-state lithium ion conductor (11c, 12c) and having an average particle diameter of greater than or equal to 2 µm and particles comprising the at least one solid-state lithium ion conductor (11c, 12c) and having an average particle diameter of less than or equal to 500 nm.

7. Material (11, 12) according to any of Claims 1 to 6, wherein the at least one organic binder (11b, 12b) conducts lithium ions, in particular wherein the at least one binder (11b, 12b) comprises at least one lithium electrolyte salt and/or intrinsically conducts lithium ions.

8. Material (11, 12) according to any of Claims 1 to 7, wherein the material (11, 12) further comprises at least one mixed conductor, in particular wherein the at least one mixed conductor is selected from the group consisting of lithium titanium oxides.

9. Material (11, 12) according to any of Claims 1 to 8, wherein the material (11, 12) comprises particles of the at least one electrode active material (11a, 12a) which are provided with an electrically conductive and/or lithium ion-conducting coating which comprises the at least one solid-state lithium ion conductor (11c, 12c) and/or carbon.

10. Material (11, 12) according to any of Claims 1 to 9, wherein the material (11, 12) is a cathode material (11) and the at least one lithiatable electrode active material (11a, 12a) is a lithiatable cathode active material (11a).

11. Material (11, 12) according to Claim 10, wherein the at least one cathode active material (11a) is a cathode active material which can be intercalated with lithium ions, in particular wherein the at least one cathode active material (11a) comprises a lithium spinel of manganese and/or a lithium cobalt oxide and/or lithium manganese oxide and/or lithium nickel oxide and/or aluminium oxide.

12. Material (11, 12) according to any of Claims 1 to 11, wherein the material (11, 12) is an anode material (12) and the at least one lithiatable electrode active material (11a, 12a) is a lithiatable anode active material (12a), in particular an anode active material (12a) which can be intercalated with lithium ions.

13. Lithium cell (10) comprising at least one electrode material (11, 12) according to any of Claims 1 to 12.

14. Lithium cell (10) according to Claim 13, wherein the cell (10) is a dry battery cell.

15. Lithium cell (10) according to Claim 13 or 14, wherein the cell (10) comprises a cathode (11) and an anode (12), where the cathode (11) comprises a material according to Claim 10 or 11 and/or the anode (12) comprises a material according to Claim 12, wherein a lithium ion-conducting solid-state electrolyte (13) which (13) comprises at least one solid-state lithium ion conductor (11c, 12c) selected from the group consisting of lithium argyrodites and lithium ion-conducting glasses is arranged between the cathode (11) and the anode (12).

## Revendications

1. Matière d'électrode (11, 12) destinée à une pile au lithium (10) et comprenant
- au moins une matière d'électrode active (11a, 12a) pouvant être lithiée,
- au moins un liant organique (11b, 12b) et
- au moins un conducteur d'ions lithium solide (11c, 12c) sous la forme d'un verre conducteur d'ions lithium basé sur la formule chimique générale : LiX:MY,
LiX représentant LiCl, LiBr et MY représentant MoO3, WO3, P2O3, As2O5 et/ou Nb2O5.

2. Matière selon la revendication 1, **caractérisée en ce que** l'au moins un conducteur d'ions lithium solide (11c, 12c) contient en outre un argyrodite de lithium, un verre au soufre, un verre au phosphate, un verre au germanium et/ou un verre conducteur d'ions lithium, basé sur la formule chimique générale : LiX:MY, LiX représentant Li₂O, Li₂S, Li₂SO₄ et/ou LiPO₃ et MY représentant Al2O3, AlCl₃, P₂O₅, SiS₂, Si₂S₂ et/ou GeS₂.

3. Matière (11, 12) selon la revendication 1 ou 2, l'au moins un conducteur d'ions lithium solide (11c, 12c) étant choisi dans le groupe des argyrodites de lithium.

4. Matière (11, 12) selon l'une des revendications 1 à 3, la matière (11, 12) comprenant des particules modifiées en surface et/ou asphériques comprenant l'au moins un conducteur d'ions lithium solide (11c, 12c).

5. Matière (11, 12) selon la revendication 4,
les particules comprenant l'au moins un conducteur d'ions lithium solide (11c, 12c) comportant un revêtement électriquement conducteur et/ou conducteur d'ions lithium, le revêtement comprenant l'au moins un conducteur d'ions lithium solide (11c, 12c) et/ou du carbone.

6. Matière (11, 12) selon l'une des revendications 1 à 5, la matière comprenant des particules qui comprennent l'au moins un conducteur d'ions lithium solide (11c, 12c) et qui ont un diamètre de particule moyen supérieur ou égal à 2 µm, et des particules qui comprennent l'au moins un conducteur d'ions lithium solide (11c, 12c) et qui ont un diamètre de particule moyen inférieur ou égal à 500 nm.

7. Matière (11, 12) selon l'une des revendications 1 à 6, l'au moins un liant organique (11b, 12b) étant conducteur d'ions lithium, en particulier l'au moins un liant (11b, 12b) comprenant au moins un sel conducteur de lithium et/ou étant intrinsèquement conducteur d'ions lithium.

8. Matière (11, 12) selon l'une des revendications 1 à 7, la matière (11, 12) comprenant en outre au moins un conducteur mixte, en particulier l'au moins un conducteur mixte étant choisi dans le groupe des oxydes de titane de lithium.

9. Matière (11,12) selon l'une des revendications 1 à 8, la matière (11, 12) comprenant des particules de l'au moins une matière d'électrode active (11a, 12a) qui sont pourvues d'un revêtement électriquement conducteur et/ou conducteur d'ions lithium qui comprend l'au moins un conducteur d'ions lithium solide (11c, 12c) et/ou du carbone.

10. Matière (11, 12) selon l'une des revendications 1 à 9, la matière (11, 12) étant une matière cathodique (11) et l'au moins une matière d'électrode active (11a, 12a) pouvant être lithiée étant une matière cathodique active (11a) pouvant être lithiée.

11. Matière (11, 12) selon la revendication 10, l'au moins une matière cathodique active (11a) étant une matière cathodique active qui peut être intercalée avec des ions lithium, en particulier l'au moins une matière cathodique active (11a) étant un spinelle lithié de manganèse et/ou d'un oxyde lithié de cobalt et/ou de manganèse et/ou de nickel et/ou d'aluminium.

12. Matière (11, 12) selon l'une des revendications 1 à 11, la matière (11, 12) étant une matière anodique (12) et l'au moins une matière d'électrode active (11a, 12a) pouvant être lithiée étant une matière anodique active (12a) pouvant être lithiée, en particulier une matière anodique active (12a) qui peut être intercalée avec des ions lithium.

13. Pile au lithium (10), comprenant au moins une matière d'électrode (11, 12) selon l'une des revendications 1 à 12.

14. Pile au lithium (10) selon la revendication 13, la pile (10) étant une cellule de batterie sèche.

15. Pile au lithium (10) selon la revendication 13 ou 14, la pile (10) comprenant une cathode (11) et une anode (12), la cathode (11) comprenant une matière selon la revendication 10 ou 11 et/ou l'anode (12) comprenant une matière selon la revendication 12, un électrolyte solide (13) conducteur d'ions lithium étant disposé entre la cathode (11) et l'anode (12), lequel (13) comprend au moins un conducteur d'ions lithium solide (11c, 12c) choisi dans le groupe des verres conducteurs d'argyrodites de lithium et d'ions lithium.
